# EUROPEAN PATENT APPLICATION

(11) **EP 1 826 558 A1**
(43) Date of publication of application: **29.08.2007**
(21) Application number: 06077037.7
(22) Date of filing: 16.11.2006
(51) Int. Cl.: G01N 29/11, G01N 29/24, F16F 9/30, G01M 7/02, G10K 11/16, F16F 15/00

(54) **Active/passive devices for vibration control and damage detection**

(30) Priority: 09.12.2005 ES 200503032
(71) Applicant: Gamesa Desarrollos Aeronauticos, S.A., 01510 Miñano (Alava) (ES)
(72) Inventor: Kawiecki, Grzegorz Gamesa Desarrollos Aeronáuticos, 01510 Miñano (Alava) (ES); Peña Macias, Julio Gamesa Desarrollos Aeronáuticos, 01510 Miñano (Alava) (ES)

(57) **Abstract**

This invention is referring to active/passive devices for vibration control and damage detection in structures. The union of active (piezoelectrics in this application, but not limited to these) and passive (viscoelastics in this application, but not limited to these) elements makes possible to combine a system of vibration control with a system of structural damage detection based in the anomalies detection in the elastic waves propagation, in changes of electro mechanic impedance or in others changes of the characteristics or the environment of the active elements.

The application of this invention is the vibration control and damage detection in aeronautic and others thin-plate structures.

## Description

### Summary of the invention

The present invention is based in the use of active / passive devices for vibration control and damage control in the structures.

The active / passive devices for vibration control and damage detection in structures, subject of this invention, can be of piezoviscoelastic type, although this invention is not limited to this material type, it will be used in this report. The development of this piezoviscoelastic devices application tries to achieve the two objectives, completely differents, using the same physical system.

This invention is based in the active / passive devices use for damage detection, through anomalies detection in the elastic waves propagation or through monitoring of electro mechanic impedance of these device or through others changes of the characteristics or the environment of the active elements, and the vibration control by means of the device's viscoelastic components characteristics checked by an external system through the piezoelectric elements.

The system and method of vibrations damping and damage detection here developed can be applied, although it's not limited, in the aeronautic structures and civil engineering.

### Background of the invention

There are a lot of patents related to the structural monitoring using the propagation of the elastic waves generated by piezoelectrics and to the vibration control using piezoviscoelastic devices.

The US 545053 patent is referred to a vibration control system based in piezoviscoelastic devices. There are important reductions of the vibration level, but the system is not able for monitoring.

The damping system exposed in the US 6598717 patent shows an improved version of the previous system, but the damage detection function is not included either. Nevertheless, the system achieves higher damping levels.

The WO 02/062206 A2 patent application describes systems based in the application of a network of thin piezotransducers, installed on the structure, for emitting and receiving elastic waves. Anomalies in the waves propagation can be related to the damages of the material that is in the path of the propagating wave. The system, object of the present invention, also has the ability of vibration control.

The US 2003/0167141 patent application is referred to a new system of signals production by piezotransducers. The only application of this system: damage detection.

The described piezotransducers in the US 6762533 and US 6777727 patents are also designed only for monitoring; the weight saving is higher in the present invention.

Although, both damage detection systems based in piezoelectric elements application and vibration control systems based in piezoviscoelastic devices already exist, the use of the same network of elements, in order to develop these functions, makes possible to reduce the complexity of the system and the weight of the whole structure.

### Description of the invention

The safety level increment and the maintenance costs reduction requirements entail the need for the vibration control and damage detection systems installation in the structures. The installation of these systems always increases the weight and the complexity level of the structure. In order to reduce these problems, this application of active / passive devices has been developed.

An objective of the present invention is to combine a vibration control system with a damage detection system based in the anomalies detection in the elastic waves propagation, or in changes of the electro-mechanical impedance or in others changes of the characteristics or the environment of the active elements.

A practical test of this invention is composed of passive elements (made in viscoelastic material for this embodiment, but not limited to these), designed for the vibration energy dissipation, and active components designed for increasing the dissipated energy level by the passive elements. The active elements can modify the passive elements behaviour, and they can also monitor the structure through anomalies detection in the propagation of the elastic waves generated by the active elements or using the others above-mentioned methods. The elastic wave reception and emission capability of the piezoelectric elements allows using sensors, actuators or both elements of the piezoviscoelastic devices for damage detection in the structure. Due to dependency of the transmitted elastic wave between two transducers on the physic properties of the media, the waves are affected by the possible structural damages in the structure to monitor. Any anomaly in the transmissibility function contains, therefore, information about the structural anomalies in the path of the propagating wave.

From the above mentioned, the following advantage is extracted: the new application of these active / passive devices permits to develop simultaneously the vibration control and the damage monitoring functions. This characteristic involves a weight and complexity reduction of the device with regards to others devices with similar characteristics according the background of the invention.

### Brief description of the drawings

The included figures can aid to explain the present invention, supporting in graphic form the showed descriptions.
Figure 1: diagram of a possible realization of the piezoviscoelastic device, where (1) is the constraining active sheet or actuator (piezoelectric), (2) the viscoelastic sheet, (3) the sensor sheet (piezoelectric) and (4) is the base structure.
Figure 2: concept of damage detection through anomalies in the elastic waves propagation, where (4) is the base structure to monitor, (5), (6), (7) and (8) are devices in contact with the structure (4) and (9) is a structural damage (flaw, corrosion, delamination, but not limited to these).

### Description of the preferred embodiments of the invention

The system, aim of this patent, includes:

A network of devices composed of passive elements (viscoelastics in this application, but not limited to these), able to dissipate energy, and active elements (piezoelectrics in this application, but not limited to these), able to generate and receive elastic waves in the structure. These devices can be installed on the damped / monitored structure bonded to the surface or embedded in the structure.

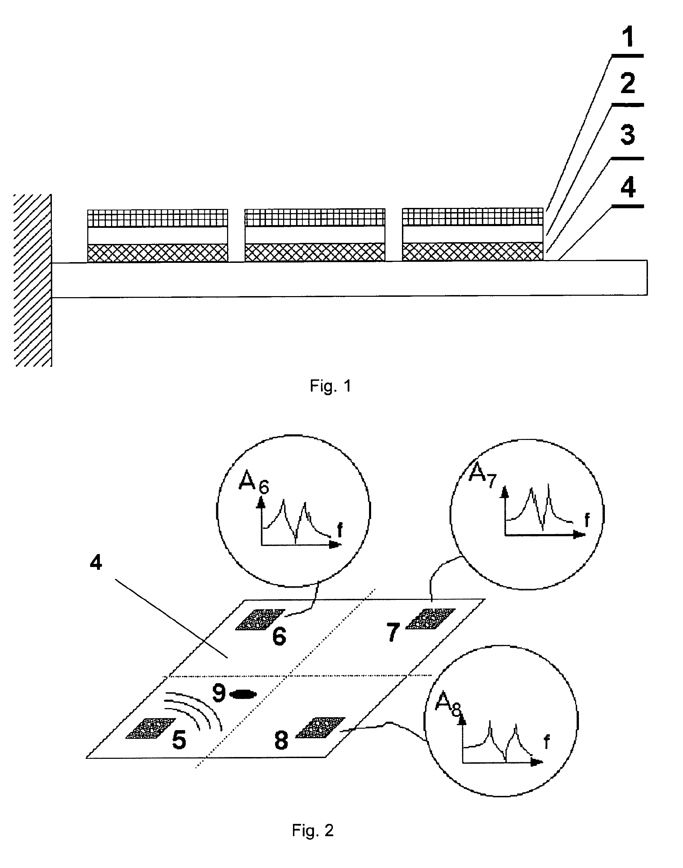

The figure 1, where (1) is the constraining active sheet or actuator (piezoelectric), (2) is the viscoelastic sheet, (3) is the sensor sheet (piezoelectric) and (4) is the base structure, shows a possible configuration of the piezoviscoelastic device. Other possible configuration of the device pass through installing the sensor sheet (3) apart from viscoelastic material (2) and active (1) sheets: e.g., install the sensor sheet (3) on the opposite surface of the structure instead of on the same surface of the viscoelastic material (2) and active (1) sheets.

The dimensions and distribution of the sheets in the developed system depends on different parameters, such as:
- geometric characteristics of the base structure to monitor,
- material of the base structure,
- expected vibration levels,
- number and materials of devices to install, and, but not limited to,
- expected damage types

Being a device network as the one showed in the figure 1, if the base structure (4) vibrates, this vibration strains the sensor sheet (3) according to the vibration. This deformation generates two effects: on the one hand, it stretches directly the viscoelastic sheet (2), which is placed on the sensor sheet (3), absorbing part of the structure vibration (4), on the other hand, it sends information about the vibration level to the actuator or active sheet (1), that is mounted on the sheet (2), controlling the deformation of the viscoelastic sheet (2) and therefore controlling the deformation of the base structure (4).

The figure 2 shows a preferred embodiment of the devices application for damage detection in the structure, where (4) is the base structure to be monitored and (9) is a damage of the structure (flaw, corrosion, delamination, but not limited to these); there is a distributed devices network formed by four devices (5), (6), (7) and (8) in contact with the structure (4) (bonded or embedded). These devices consist of a piezoelectric material part, which allows them to work as emitters as well as receptors of elastic waves. In the showed network, the device (5) is excited through a frequency sweep, a pulse or other signal type generated by an electric signal source (not represented), what actives the piezoelectric sheet (it could be a sensor sheet or an actuator sheet) of the same device (5) generating an elastic wave that propagates through the structure (4), this wave is received by the devices (6), (7) and (8) which are connected to a data acquisition system (not represented), this system lets obtaining the data of the elastic wave received by each device. When this operation is finished, it is possible to consider a different device of the network as source, to generate the elastic wave, and repeat the process. The frequency range of the excitation (frequency swept, pulses or signals, but not limited to these) is of a different order of magnitude than the fundamental frequencies of the structural vibration, and then interference problems are avoided.

The presence of a defect (9) and the characteristics of this (dimensions, location, type, etc) have influence on the transfer function among the different devices, so an analysis of these functions permits to detect the damage presence, its type, its dimension and location in the structure.

The method, subject of this patent, includes;

The installation of one or several devices of dual use: damping / damage monitoring, surface mounted or embedded in the structure to monitor.

The generation of elastic waves with the desired characteristics (duration, amplitude and frequency) through the excitation of the device's active elements, through a frequencies sweep, pulses or other signals patterns.

The data collection of the generated elastic waves to measure changes in the electro mechanical impedance or others characteristics of the active elements or the environment characteristics in order to detect the possible damages in the structure and their evolution in time.

The vibration control in the base structure, through the control of the deformation of the viscoelastic sheet, that is a component of the devices, by means of the actuation on the actuator sheet.

## Claims

1. -Active / passive devices for vibration control and damage detection of those that are distributed surface mounted or embedded in the monitored structure, **characterized by**, at least, two active elements (sensor and actuator), designed in order to send and to receive elastic waves, and a passive element designed to the control of the vibrations in the base structure, the actuator must be in contact with the passive elements and the remaining active elements must be in contact with the base structure but there is no need the contact with the passive element.

2. - Active / passive devices for vibration control and damage detection according to claim 1, comprising the characteristic of the device network to be used for both damage detection and vibration control of the base structure.

3. - Active / passive devices for vibration control and damage detection according to claim 2, comprising the possibility to be surface mounted or embedded in the monitored structure, and following a particular distribution that depends on:
- the geometric characteristics of the base structure,
- the material of the base structure,
- the expected vibration levels, and
- the expected damage types, but not limited to these.

4. - Active / passive devices for vibration control and damage detection according to previous claims, comprising the fact that to detect and monitor the damages, a active element of the devices is excited by means of a frequencies sweep, a pulse or other electric signal, generating elastic waves that propagate through the base structure and are received by other active elements for data processing and detection of anomalies that reveal the presence and the characteristics of the structural damage.

5. - Active / passive devices for vibration control and damage detection according to previous claims that, when used for the vibration control, the active sheet (sensor) in contact with the base structure, when deformed due to the vibration, sends the information of the vibration to the external control system.

6. - Active / passive devices for vibration control and damage detection according to previous claims comprising the fact that, when used for the vibration control, the active element (actuator), in contact with the passive element of one device, when deformed due to the controlled signal emitted through an external control system, deform the viscoelastic element, in contact with it, such that the vibration energy is absorbed, partially, by the device.

7. - Active / passive devices for vibration control and damage detection according to previous claims comprising the fact that, when used for the vibration control, the active element (actuator), in contact with the passive element of one device, when deformed due to the controlled signal emitted through an external control system, deforms the viscoelastic element in contact with it, such that part of the vibration energy is transferred to the structure through the device.
